# EUROPÄISCHE PATENTSCHRIFT

(11) **EP 1 959 244 B1**
(45) Veröffentlichungstag und Bekanntmachung des Hinweises auf die Patenterteilung: **25.05.2011**
(21) Anmeldenummer: 07102300.6
(22) Anmeldetag: 13.02.2007
(51) Int. Cl.: G01F 11/00, B65B 1/04

(54) **Dosiervorrichtung mit Schlagwerk**
Metering device with striking mechanism
Dispositif de dosage doté d'une sonnette

(43) Veröffentlichungstag der Anmeldung: 20.08.2008
(73) Patentinhaber: Mettler-Toledo AG, CH-8606 Greifensee (CH)
(72) Erfinder: Lüchinger, Paul, 8610, Uster (CH); Fringeli, Eduard, 8608, Bubikon (CH)

(56) Entgegenhaltungen:
- DE-B- 1 012 250
- US-A1- 2006 011 653

## Beschreibung

Die vorliegende Erfindung bezieht sich auf eine Dosiervorrichtung für pulverförmiges Dosiergut, insbesondere auf eine Dosiervorrichtung, welche eine zur Auflockerung des in einer Dosiereinheit enthaltenen Dosierguts geeignete Aufnahmevorrichtung aufweist.

Dosiervorrichtungen für pulverförmiges Dosiergut finden insbesondere beim Dosieren kleiner Mengen mit hoher Präzision in kleine Zielgefässe Verwendung. Häufig sind solche Zielgefässe auf einer Waage platziert, um die Menge des aus der Dosiervorrichtung ausgetragenen Dosierguts zu verwiegen, so dass es anschliessend bestimmungsgemäss weiter verarbeitet werden kann.

Das zu dosierende Dosiergut befindet sich beispielsweise in einer Dosiereinheit, welche ein Entnahmegefäss und einen Dosierkopf aufweist. Dabei ist es wünschenswert, das zu dosierende Dosiergut durch eine kleine Austragungsöffnung der Dosiereinheit auszutragen, so dass sie auch gezielt in ein Gefäss mit einem kleinen Öffnungsquerschnitt abgefüllt werden kann.

Manches pulverförmige Dosiergut läuft nahezu von selbst in einem gleichmässigen Strom aus einer kleinen Austragungsöffnung heraus, vergleichbar mit dem fliessenden Sand in einer Sanduhr. In diesem Fall kann der Massenstrom des Dosierguts einfach gesteuert werden, indem man den Querschnitt der Austragungsöffnung mit einer passenden Blendenverschlussvorrichtung verändert. Jedoch haben die Partikel vieler pulverförmiger Substanzen die Tendenz zusammenzukleben. Zudem sind die meisten Pulver komprimierbar, so dass sich im Dosiergut Klumpen aus gepresstem Pulver bilden, welche die Austragungsöffnung teilweise oder vollständig verstopfen können. Als typisches Beispiel weist Maisstärke eine hohe Tendenz zum aneinanderhaften der Partikel auf. Zudem ist die Maisstärke sehr komprimierbar. Aufgrund dieser Eigenschaften wird Maisstärke folglich häufig als Testmaterial verwendet, um die Leistungsfähigkeit von Dosiervorrichtungen auszutesten. Die Probleme die das Aneinanderhaften und die Komprimierbarkeit eines Dosierguts verursacht, auch unter dem Begriff "Klebrigkeit" eines Dosierguts bekannt, führten zu zahlreichen Lösungsvorschlägen und Ausführungen von Dosiervorrichtungen beziehungsweise von deren Dosierköpfen. Beispielsweise existieren Dosierköpfe mit Förderschnecken, um das klebrige Dosiergut vom Entnahmegefäss zur Austragungsöffnung des Dosierkopfs zu fördern. Ferner sind Rührwerke und Schabvorrichtungen bekannt, die das Dosiergut von den Innenwänden des Entnahmegefässes und Dosierkopfs kratzen und zur Förderschnecke hin treiben. Die Rührwerke dienen ferner dazu, die sogenannte Brückenbildung des Dosiergutes im Entnahmegefäss zu verhindern. Anstelle eines Rührwerks oder in Kombination mit demselben sind im Stand der Technik auch klopfende und vibrierende Vorrichtungen bekannt.

Ein möglicher Vorschlag zur Lösung der vorangehend aufgeführten Probleme wird in der US 2006/0011653 A1 offenbart. Eine Dosiervorrichtung zur Dosierung von pulverförmigem Dosiergut im Bereich von wenigen Milligramm bis zu einigen Gramm mit einer Zielgewichtgenauigkeit von weniger als +/- 5% des Zielgewichtes weist eine Dosiereinheit auf, welche im Wesentlichen ein Entnahmegefäss und einen Dosierkopf beinhaltet. Die Innenwand des Dosierkopfs ist von der Verbindungsstelle mit dem Entnahmegefäss gegen eine Austragungsöffnung hin konisch ausgebildet. Im Betriebszustand befindet sich die Austragungsöffnung an der Unterseite der Dosiereinheit und somit unterhalb des Entnahmegefässes. Im Betriebszustand fliesst freifliessendes Dosiergut innerhalb der Dosiereinheit unter Einwirkung der Schwerkraft zur Austragungsöffnung hin. Die Austragungsöffnung ist mit einem Blendenverschlussventil versehen, welcher zur Regulierung des austretenden Massenstroms des Dosiergutes dient. Die Dosiervorrichtung weist Mittel zum Vibrieren und/oder Klopfen des Behälters auf und kann zudem ein Rührwerk aufweisen, welches entlang seiner Mittellängsachse beziehungsweise Drehachse zusätzlich linear auf und ab bewegt werden kann.

In Tests mit Maisstärke zeigte sich, dass dessen Austragung aus verschieden ausgestalteten Dosiereinheiten erhebliche Schwierigkeiten verursacht. Die Fliessfähigkeit eines solchen Dosierguts ist direkt davon abhängig wie locker dessen Aufschüttung, auch bekannt als Schüttgutdichte, ist. In einigen Versuchen konnte es sich ergeben, dass das Dosiergut durch den Einsatz eines Rührwerks und/oder den Einsatz von Mitteln zum Vibrieren verdichtet anstatt aufgelockert wurde. Das Resultat war, dass trotz vollständig geöffneter Austragungsöffnung kein Dosiergut aus der Dosiereinheit ausgetragen werden konnte.

Aufgabe der vorliegenden Erfindung ist daher, eine Dosiervorrichtung zu schaffen, die es ermöglicht, das in der Dosiereinheit befindliche Dosiergut vor dem Dosiervorgang und für den Dosiervorgang zu konditionieren, insbesondere aufzulockern.

Diese Aufgabe wird mit einer Dosiervorrichtung gelöst, welche die im unabhängigen Patentanspruch angegebenen Merkmale aufweist.

Eine Dosiervorrichtung für pulver- oder pastenförmiges Dosiergut weist eine Haltevorrichtung und mindestens eine Aufnahmevorrichtung auf. In diese Aufnahmevorrichtung ist mindestens eine Dosiereinheit einsetzbar beziehungsweise aus dieser Aufnahmevorrichtung entfernbar. Ferner weist die Dosiervorrichtung mindestens einen auf die Aufnahmevorrichtung einwirkenden Aktuator auf. Die Aufnahmevorrichtung ist an der Haltevorrichtung schwenkbar gelagert. Durch den Aktuator sind oszillierende Schwenkbewegungen der Aufnahmevorrichtung erzeugbar.

Der Aktuator wirkt dabei mit einer kurzen Abfolge mehrerer Schläge auf die Aufnahmevorrichtung ein. Die Aufnahmevorrichtung beginnt unter der Einwirkung der Schläge zu pendeln. Die Schwingfrequenz der Aufnahmevorrichtung ist vorzugsweise in Dissonanz zur Schlagfrequenz des Aktuators. Dies führt dazu, dass die durch die Schläge erzeugten Schockwellen oder mechanischen Pulse unterschiedliche Richtungen aufweisen. Selbst bei einem sehr kleinen Schwenkwinkel von +/- 1 ° konnten hervorragende Resultate betreffend einer Auflockerung des Dosiergutes auch bei stark "klebrigem" Dosiergut erzielt werden.

Die hohe Auflockerungsleistung der erfindungsgemässen Aufnahmevorrichtung kann auf die Richtungsänderung der mechanischen Pulse infolge des Schwenkvorganges zurückgeführt werden. Anders als beim Einsatz eines linear auf die Dosiereinheit einwirkenden Aktuators können sich Pulverpartikel mit beispielsweise flockenartiger Partikelform, durch die Schwenkbewegung nicht gemäss der vom linear wirkenden Aktuator vorgegebenen Bewegungsrichtung ausrichten. Dadurch wird eine Verdichtung wie sie bei linear einwirkenden Aktuatoren beobachtet wurde, verhindert.

Die Probleme einer Verdichtung von Dosiergut werden auch von den bekannten Rührwerken verursacht, durch deren vorgegebene Drehrichtung das Dosiergut laufend verdichtet wird. Zudem erreichen die Rührwerke mit ihren Rührflügel nicht alle Bereiche innerhalb der Dosiereinheit, so dass sich in einzelnen "toten" Winkeln Klumpen bilden, welche die Austragungsöffnung der Dosiereinheit verstopfen können.

Die Pulse des Aktuators dienen im Zusammenspiel mit der schwenkbar gelagerten Aufnahmevorrichtung somit insbesondere der Konditionierung des in der Dosiereinheit enthaltenen Dosierguts unmittelbar vor dem eigentlichen Dosiervorgang. Konkret wird die Fliessfähigkeit des Dosiergutes vor dem Dosiervorgang verbessert und ein homogeneres Fliessverhalten des Dosiergutes erreicht.

Die mechanischen Pulse des Aktuators können selbstverständlich auch der Förderung des Dosierguts innerhalb der Dosiereinheit dienen, beziehungsweise den Austragungsvorgang unterstützen.

Idealerweise ist die Schwenkachse der Aufnahmevorrichtung in Betriebsstellung der Dosiervorrichtung im Wesentlichen horizontal angeordnet. Durch die Schwenkbewegung wird das Dosiergut gegen die Schwerkraftrichtung im Entnahmegefäss ähnlich dem Worfeln aufgeworfen. Um bei einem Dosiergut, das verschiedene Substanzen mit unterschiedlichen Dichten aufweist, einer Entmischung durch die oszillierenden Bewegungen entgegenzuwirken, kann die Dosiereinheit zusätzlich ein Rührwerk aufweisen.

Je nach Auslegung der Dosiereinheit kann die Dosiervorrichtung eine Antriebsvorrichtung mit einer Antriebswelle aufweisen, wobei die Antriebswelle mittels einer Kupplung mit einer Verschlusswelle und/oder einer Rührwerkswelle der Dosiereinheit verbindbar ist. Sofern sich die Antriebsvorrichtung nicht mit der Aufnahme mitbewegt, sondern mit der Haltevorrichtung verbunden ist, sollte die Kupplung zur Aufnahme achsialer Verschiebungen und Drehachsenwinkeländerungen der Verschlusswelle relativ zur Antriebswelle infolge der Schwenkbewegungen einen Längen- und Winkelausgleich aufweisen. Um den erforderlichen Längen- und Winkelausgleich möglichst klein zu halten, ist die Kupplung vorzugsweise in einer die Schwenkachse enthaltenden, horizontalen Ebene angeordnet. Die Dosiereinheit verfügt vorzugsweise über eine Steuer- und Regeleinrichtung, welche während eines Dosiervorganges den aus einer Austragungsöffnung der Dosiereinheit austretenden Massenstrom steuert beziehungsweise regelt. Über diese Steuer- und Regeleinrichtung kann ebenfalls der Aktuator aktiviert und gegebenenfalls auch die Stärke der mechanischen Pulse beeinflusst werden.

Zur Abstützung der Reaktionskräfte der mechanischen Pulse des Aktuators stehen verschiedene Möglichkeiten offen. In einer ersten Ausführung kann der Aktuator wirkungsbezogen zwischen der Haltevorrichtung und der Aufnahmevorrichtung angeordnet sein. Wirkungsbezogen heisst im vorliegenden Falle, dass die Reaktionskräfte des Aktuators durch die Haltevorrichtung abgestützt werden und die Aktionskräfte des Aktuators auf die Aufnahmevorrichtung einwirken. Der Aktuator kann, muss aber nicht zwingend physisch zwischen der Aufnahmevorrichtung und der Haltevorrichtung angeordnet sein. Aus Platzgründen kann es vorteilhaft sein, dass der Aktuator hinter der Haltevorrichtung angeordnet ist und über einen Stempel auf die Aufnahmevorrichtung einwirkt, wobei der Stempel durch eine Durchführung der Haltevorrichtung hindurchreicht.

In einer zweiten Ausführung kann der Aktuator mit der Aufnahmevorrichtung wirkverbunden sein und der Aktuator ein Pendel zur Aufnahme der Reaktionskräfte der mechanischen Impulse des Aktuators aufweisen. Dadurch wird eine Übertragung von Erschütterungen auf den Untergrund vermieden oder zumindest reduziert, welche Erschütterungen weitere Vorrichtungen in ihrer Funktion beeinflussen oder gar beeinträchtigen könnten, beispielsweise eine Waage zur Verwiegung der in ein Zielgefäss eindosierten Menge Dosiergut. Vorzugsweise wird der Pendelausschlag dieses Pendels mittels Dämpfungselementen begrenzt.

Das Pendel weist vorzugsweise eine Pendelstange und eine Pendelmasse auf, wobei die Pendelmasse durch hinzufügen oder entfernen von Gewichtsstücken veränderbar ist. Dadurch können die Einwirkungen des Aktuators auf die Aufnahmevorrichtung oder auf an mit der Aufnahmevorrichtung verbundenen Teilen verändert werden. Eine Veränderung der Einwirkungen des Aktuators kann natürlich auch dadurch erreicht werden, dass die Pendelmasse entlang der Pendelstange verschiebbar und an einer beliebigen Position der Pendelstange feststellbar ist.

Sofern das Massenträgheitsmoment des Pendels bezogen auf die Schwenkachse zumindest dem Massenträgheitsmoment der Aufnahmevorrichtung mit eingesetzter Dosiereinheit bezogen auf die Schwenkachse entspricht, müssen keine resultierenden Kräfte oder Momente über die Haltevorrichtung am Untergrund abgestützt werden.

Je grösser die Amplituden der zu erzeugenden mechanischen Pulse beziehungsweise Schockwellen in der Aufnahmevorrichtung sein sollen, desto grösser muss das Massenträgheitsmoment des Pendels in Relation zum Massenträgheitsmoment der Aufnahmevorrichtung sein. Um besonders grosse Amplituden zu erhalten, kann im Wesentlichen die gesamte Haltevorrichtung als Pendel masse dienend pendelnd aufgehängt sein.

Wie weiter oben erwähnt, könnten die Schwenkbewegungen ein Entmischen des Dosiergutes hervorrufen. An Stelle eines Rührwerks oder in Kombination mit einem Rührwerk kann zur Verhinderung des Entmischungs- Effektes auch der Schwenkbereich mit verschiedenen Mitteln, insbesondere mittels Einstellelementen und/oder Positionierungs- und Anschlagelementen begrenzt werden. Die Einstellelemente sind im Wesentlichen verstellbare Endanschläge, welche gegebenenfalls Dämpfungselemente aufweisen. Die Dämpfungselemente können einfache Gummielemente sein, aber auch Hydraulik- oder Gasdämpfungselemente sowie aktiv gesteuerte Dämpfungselemente sind einsetzbar. Federelemente und Dämpfungselemente können sowohl lineare als auch progressive Kennlinien aufweisen.

Wie bereits weiter oben erwähnt, haben verschiedene Versuche gezeigt, dass mit der erfindungsgemässen Aufnahmevorrichtung besonders gute Resultate betreffend der Auflockerung von Dosiergut in der Dosiereinheit erzielt werden können, wenn der Aktuator mittels Schlägen auf die Aufnahmevorrichtung einwirkt, beziehungsweise Schockwellen in der Aufnahmevorrichtung erzeugt. Diese werden über die Aufnahmevorrichtung an die Dosiereinheit weitergeleitet. Um eine gute Weiterleitung der Schockwellen zu erreichen, sollte die Dosiereinheit möglichst starr mit der Aufnahmevorrichtung verbunden sein. Eine mögliche Ausführungsvariante eines Aktuators weist eine mittels einer Schlagfeder beaufschlagbare Hammermasse auf, wobei die Schlagfeder durch einen Spannmechanismus spannbar und schlagartig freigebbar ist. Bei der Freigabe wird die Hammermasse durch die Schlagfeder beschleunigt und erzeugt durch den Aufprall der Hammermasse an der Aufnahmevorrichtung eine Schockwelle in der Aufnahmevorrichtung. Selbstverständlich sind auch andere Aktuatoren wie beispielsweise mehrerer, in Serie geschaltete piezoelektrische Aktuatoren oder ein Exzenter- Vibrator einsetzbar, wie er in Mobiltelefonen zur tonlosen Alarmierung des Benutzers verwendet wird.

Sofern die Dosiervorrichtung über einen Aktuator verfügt, dessen Pulsamplitude nicht einstellbar ist, kann die Dosiervorrichtung auch mindestens ein der Einstellung der Pulsamplitude des Aktuators dienendes einstellbares Federelement und/oder ein Dämpfungselement aufweisen. Diese Elemente sind vorzugsweise zwischen der Aufnahmevorrichtung und der Haltevorrichtung angeordnet. Im Idealfall sind die Elemente derart konzipiert, dass sie sowohl den Schwenkbereich begrenzen als auch der Einstellung der Pulsamplitude dienen.

Sofern der Benutzer aus mehreren Dosiereinheiten Dosiergut entnehmen und in einem Zielgefäss mischen will, stellt es einen gewissen Aufwand und Zeitverlust dar, wenn er die Dosiereinheiten in der Dosiervorrichtung manuell oder automatisiert nacheinander auswechseln muss. Unter Umständen weniger, aber immer noch mit Aufwand und Zeitverlust verbunden ist das manuelle oder automatisierte transportieren des Zielgefässes zu weiteren Dosiervorrichtungen.

Vorzugsweise weist die Dosiervorrichtung deshalb eine Haltevorrichtung mit einer horizontalen Linearführung auf. Ein erster Hauptteil der Haltevorrichtung ist durch die Linearführung mit einem zweiten Hauptteil verbunden und an diesem linear, im Wesentlichen horizontal geführt. An der Haltevorrichtung sind mehrere Aufnahmevorrichtungen nebeneinander und einzeln schwenkbar gelagert, angeordnet. Durch diese speziell ausgestaltete Haltevorrichtung ist es möglich, dass die in die Aufnahmevorrichtungen eingesetzten Dosiereinheiten nacheinander durch einfache lineare Verschiebung in eine Arbeitsposition gebracht werden können. Die Arbeitsposition ist diejenige Position, in welcher die Dosiereinheit mit der Antriebsvorrichtung verbunden werden kann. Üblicherweise ist das Zielgefäss auch im Bereich der Arbeitsposition angeordnet, meistens unterhalb der Dosiereinheit beziehungsweise unterhalb deren Austragungsöffnung.

Um den Raumbedarf gering zu halten, kann der erste Hauptteil der Haltevorrichtung auch ringförmig ausgebildet und um eine vertikale Achse am zweiten Hauptteil drehbar gelagert sein. An der Aussenseite des ringförmigen ersten Hauptteils der Haltevorrichtung sind mehrere Aufnahmevorrichtungen nebeneinander und einzeln schwenkbar gelagert, angeordnet.

Damit bei einer Mehrfachanordnung von Aufnahmevorrichtungen nicht für jede Aufnahmevorrichtung ein Aktuator vorgesehen werden muss, kann im Bereich der Antriebsvorrichtung, beziehungsweise im Bereich der Arbeitsposition, nur ein Aktuator angeordnet sein. Durch dessen Pulse können oszillierende Schwenkbewegungen nur bei der jeweils in der Arbeitsposition befindlichen Aufnahmevorrichtung erzeugt werden.

Es ist bekannt, dass pulverförmiges Dosiergut kompressibel ist und innerhalb einer Aufschüttung lokal sehr unterschiedliche Schüttungsdichten vorhanden sein können. Bereits durch den Transport einer Dosiereinheit können solche Unterschiede entstehen. Diese Unterschiede wirken sich direkt auf den Massenstrom beim Austragen des Dosiergutes aus der Austragungsöffnung aus und machen eine Vorausberechnung, wann die Austragungsöffnung geschlossen werden muss damit nicht zuviel Dosiergut ausgetragen wird, sehr schwierig. Wie oben bereits ausführlich dargelegt, besteht die Hauptaufgabe des Aktuators in Verbindung mit der schwenkbar gelagerten Aufnahmevorrichtung nicht primär darin, die Austragung während des Dosiervorganges zu unterstützen, sondern das Dosiergut im Sinne einer Vorkonditionierung aufzulockern, um eine möglichst homogene Schüttgutdichte des in der Dosiereinheit enthaltenen Dosiergutes zu erreichen.

Ein mögliches Verfahren zum dosieren von pulverförmigem Dosiergut mit einer erfindungsgemässen Dosiervorrichtung kann wie folgt ablaufen:
- in einem ersten Schritt wird eine Dosiereinheit in die Dosiervorrichtung eingesetzt und die Dosiereinheit mit der Antriebsvorrichtung gekuppelt,
- in einem zweiten Schritt wird mit dem Aktuator das Dosiergut aufgelockert,
- in einem dritten Schritt wird die gewünschte Zielmenge Dosiergut durch Einwirkung der Antriebsvorrichtung auf die Dosiereinheit in ein Zielgefäss ausgetragen,
- gegebenenfalls werden weitere Zielmengen in weitere Zielgefässe ausgetragen
- in einem fünften Schritt wird die Dosiereinheit aus der Dosiervorrichtung entfernt.

Selbstverständlich kann auch zwischen jedem Austragen einer Zielmenge in ein Zielgefäss, und/oder nach dem Erreichen einer bestimmten Austragungsmenge von Dosiergut, das Dosiergut in der Dosiereinheit durch den Aktuator aufgelockert werden.

Wie weiter oben erwähnt wirken zur Auflockerung des Dosiergutes in der Dosiereinheit mehrere, durch den Aktuator erzeugte mechanische Pulse auf die Aufnahmevorrichtung ein. De verschiedenen Pulver können sich auch bezüglich des Auflockerungsvermögens der erfindungsgemässen Dosiervorrichtung unterschiedlich verhalten. Idealerweise werden deshalb in Vorversuchen die Frequenz und die Amplitude für ein spezifisches Dosiergut ermittelt, bei denen eine maximale Wirkung betreffend einer Auflockerung dieses Dosiergutes erzielt werden kann. Diese auf das Dosiergut abgestimmten Werte von Frequenz und Amplitude der mechanischen Pulse, können dann in der die Steuer- und Regeleinrichtung eingespeichert und bei Bedarf abgerufen werden.

Wie bereits weiter oben erwähnt, ist idealerweise die Schlagfrequenz des Aktuators in Dissonanz zur Schwingfrequenz der Aufnahmevorrichtung.

Einzelheiten der erfindungsgemässen Dosiervorrichtung ergeben sich anhand der Beschreibung der in den Zeichnungen dargestellten Ausführungsbeispiele. Es zeigen:
- Fig. 1: eine dreidimensionale Darstellung einer Dosiervorrichtung mit einer pendelnd aufgehängten Haltevorrichtung, an welcher Haltevorrichtung eine Aufnahmevorrichtung schwenkbar gelagert ist, wobei in der Aufnahmevorrichtung eine Dosiereinheit eingesetzt ist, deren Verschlusswelle mit der Antriebswelle einer an der Haltevorrichtung angeordneten Antriebsvorrichtung über eine Kupplung verbunden ist;
- Fig. 2: die schematische Darstellung einer Dosiervorrichtung in Aufsicht in einer ersten Ausführung, wobei nur die Aufnahmevorrichtung schwenkbar gelagert ist;
- Fig. 3: die schematische Darstellung einer Dosiervorrichtung in Aufsicht in einer zweiten Ausführung, wobei die Aufnahmevorrichtung und der Aktuator als Pendel ausgestaltet, schwenkbar gelagert sind;
- Fig. 4: die schematische Darstellung einer Dosiervorrichtung in Aufsicht in einer dritten Ausführung, wobei die Aufnahmevorrichtung an der Haltevorrichtung schwenkbar gelagert ist und die Haltevorrichtung, der Aktuator und die Antriebsvorrichtung eine starre Einheit bildend, pendelnd an einem Fuss aufgehängt sind;
- Fig. 5: die dreidimensionale Darstellung einer Dosiervorrichtung im Teilschnitt, wobei die Anordnung von Haltevorrichtung, Aktuator und Aufnahmevorrichtung der in Figur 3 dargestellten zweiten Ausführung entspricht;
- Fig. 6: die dreidimensionale Darstellung einer Dosiervorrichtung mit mehreren, nebeneinander angeordneten Aufnahmevorrichtungen und darin eingesetzten Dosiereinheiten, wobei die Anordnung von Haltevorrichtung, Aktuator und Aufnahmevorrichtung der in Figur 2 dargestellten ersten Ausführung entspricht;
- Fig. 7: die schematische Darstellung der Dosiervorrichtung aus Figur 6 in Aufsicht und im Schnitt;
- Fig. 8: die dreidimensionale Darstellung einer Dosiervorrichtung mit einer Haltevorrichtung und mehreren, daran angeordneten Aufnahmevorrichtungen mit eingesetzten Dosiereinheiten, wobei ein ringförmig ausgebildeter erster Teil der Haltevorrichtung an einem zweiten Hauptteil der Haltevorrichtung drehbar gelagert ist, der Aktuator und dieAntriebsvorrichtung an einem Ständer angeordnet sind und der Ständer und der zweite Hauptteil über eine Grundplatte miteinander verbunden sind.

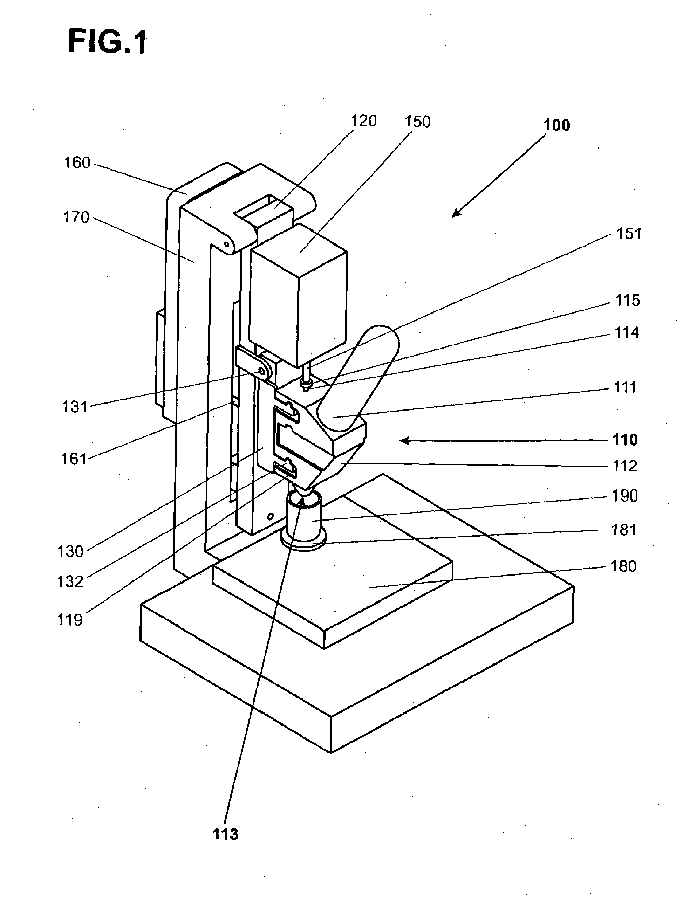

Die Figur 1 zeigt die dreidimensionale Darstellung einer Dosiervorrichtung 100 mit einer an einem Fuss 170 pendelnd aufgehängten Haltevorrichtung 120, an welcher Haltevorrichtung 120 eine Aufnahmevorrichtung 130 mittels einer Schwenkachse 131 schwenkbar gelagert ist. Die Schwenkachse 131 ist orthogonal zur Schwerkraftrichtung und daher im Wesentlichen horizontal angeordnet. In der Aufnahmevorrichtung 130 ist eine Dosiereinheit 110 eingesetzt, welche im Wesentlichen ein Entnahmegefäss 111 und einen Dosierkopf 112 aufweist. Dazu verfügt die Aufnahme 130 über geeignete Halteelemente 132, welche in am Dosierkopf 112 ausgebildete Halterungen 119 formschlüssig eingreifen.

Im Dosierkopf 112 ist ein nicht dargestellter, drehantreibbarer Verschlusskörper angeordnet, durch welchen eine, an der Unterseite des Dosierkopfs 112 ausgebildete Austragungsöffnung 113 geöffnet beziehungsweise verschlossen werden kann. Der Verschlusskörper ist mit einer Verschlusswelle 114 verbunden, welche drehantreibbar und/oder linear verschiebbar im Gehäuse des Dosierkopfs 112 gelagert ist. Diese Verschlusswelle 114 ist über eine Kupplung 115 mit einer Antriebswelle 151 einer Antriebsvorrichtung 150 verbunden. Aufgrund der durch einen Aktuator 160 erzeugten und über einen Stempel 161 auf die Aufnahmevorrichtung 130 übertragenen Schockwellen, welche Schwenkbewegungen der Aufnahmevorrichtung 130 verursachen, muss die Kupplung 115 einen Winkelausgleich und vorzugsweise auch einen Längenausgleich der Drehachse der Verschlusswelle 114 zur Drehachse der Antriebswelle 151 zulassen. Je näher die Drehachse 131 der Aufnahmevorrichtung 130 zur Drehachse der Antriebswelle 151 angeordnet ist, desto geringer ist der notwendige Längenausgleich. Unterhalb der Austragungsöffnung 113 kann auf einem Lastaufnehmer 181 einer Waage 180 ein Zielgefäss 190 positioniert werden. Durch die Wägesignale der Waage 180 kann beispielweise über eine nicht dargestellte Steuer- und Regeleinheit die Antriebsvorrichtung 150 derart beeinflusst werden, dass beim Erreichen des in der Steuer- und Regeleinheit der Dosiervorrichtung 100 eingegebenen Zielgewichts die Austrittsöffnung 113 durch das Verschlusselement verschlossen wird. Es versteht sich aber von selbst, dass der Schliessvorgang bereits vor dem Erreichen des Zielgewichtes eingeleitet werden sollte.

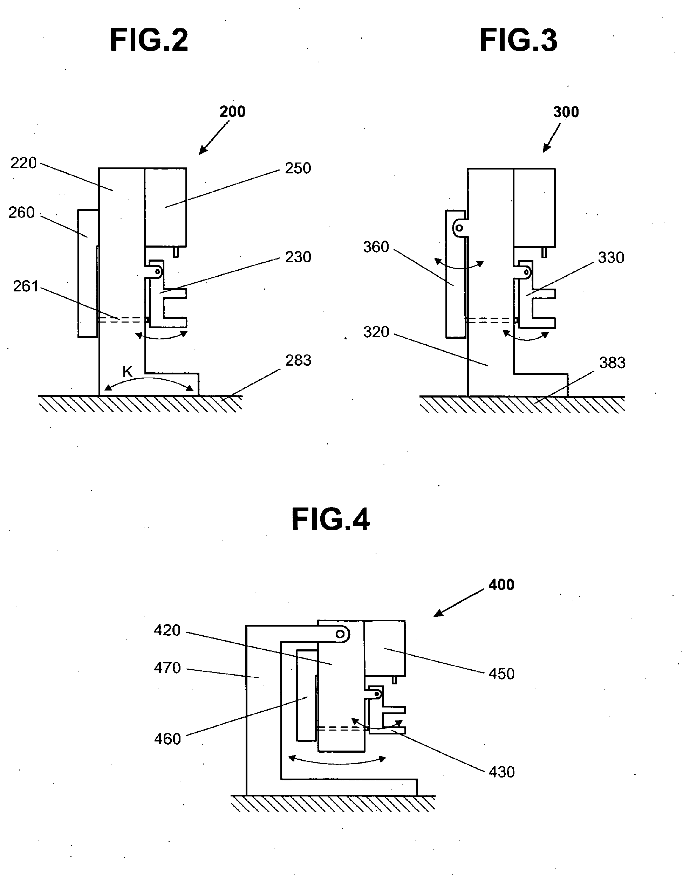

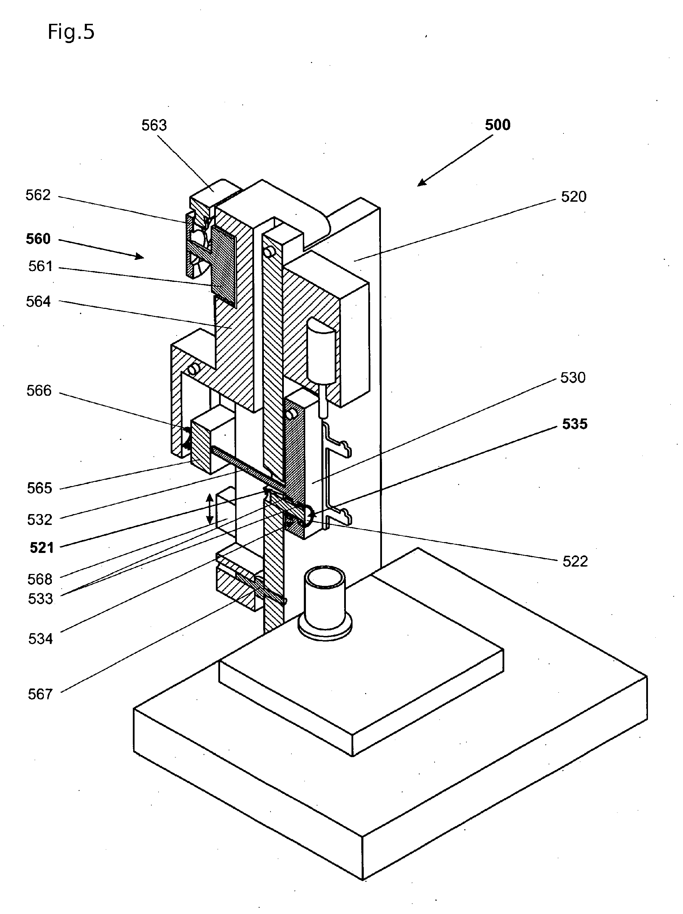

Der Aufbau und die Funktion des Aktuators 160 werden weiter unten in Figur 5 ausführlich beschrieben. Die Anordnung des Aktuators 160 und der Antriebsvorrichtung 150 an der Haltevorrichtung 120 und deren pendelnde Aufhängung am Fuss 170 zwecks der Aufnahme von Reaktionskräften des Aktuators 160 entspricht der in der Beschreibung von Figur 4 dargelegten dritten Ausführung.

Figur 2 zeigt die schematische Darstellung einer Dosiervorrichtung 200 in Aufsicht in einer ersten Ausführung. Die Haltevorrichtung 220 an welcher die Aufnahmevorrichtung 230 schwenkbar gelagert ist, dient gleichzeitig als Fuss, um die Dosiervorrichtung 200 gegen den Untergrund 283 abzustützen. Der Aktuator 260 ist mit der Haltevorrichtung 220 starr verbunden, ebenso die Antriebsvorrichtung 250. Über den Stempel 261 kann der Aktuator 260 auf die Aufnahmevorrichtung 230 einwirken.

Durch den Aktuator 260 werden Schockwellen erzeugt, welche über den Stempel 261 an die Aufnahmevorrichtung 230 übertragen werden. In einer darin eingesetzten Dosiereinheit wird das darin enthaltene Dosiergut durch die Schockwellen aufgelockert. Die gleichzeitig vom Aktuator 260 erzeugten Reaktionskräfte werden über die Haltevorrichtung 220 an den Untergrund 283 abgeleitet. Wie schon in Figur 1 beschrieben, kann die erfindungsgemässe Dosiervorrichtung 200 eine Kraftmessvorrichtung aufweisen. Eine Kraftmessvorrichtungen beziehungsweise eine Waage reagiert teilweise empfindlich auf Erschütterungen beziehungsweise auf ein Schwingen des Untergrundes 283. Diese Schwingungen werden dem Wägesignal überlagert und müssen durch geeignete Filter aus dem Wägesignal gefiltert werden, um den richtigen Wägewert ermitteln zu können und eine stabile Anzeige zu erhalten. Aufgrund der Wirkungsweise dieser Filter wird die die Ausgabe eines Wägesignals erheblich verzögert wird. Je nach Bauart der Waage beziehungsweise Kraftmessvorrichtung sind Erschütterungen mit horizontaler Amplitude aufgrund deren Auslegung weniger kritisch als Erschütterungen mit vertikal verlaufender Amplitude. Durch die Anordnung der Aufnahmevorrichtung 230 und dem Aktuator 260 über dem Untergrund 283 können aber oszillierende Kippmomente K im Bereich der Befestigungsfläche der Haltevorrichtung 220 am Untergrund 283 entstehen, deren Grösse vom Abstand des Massenschwerpunktes der Aufnahmevorrichtung 230 zum Untergrund 283 und der Amplitude der Schockwellen abhängig ist. Über die Befestigungspunkte der Haltevorrichtung 220, welche als Auflager wirken, werden die Kippmomente K in vertikale Amplituden gewandelt. Die durch Erschütterungen mit vertikaler Amplitude verursachten Verzögerungen können dazu führen, dass der Dosiervorgang erheblich länger andauert, da je nach Dosierverfahren eine schrittweise Annäherung an das Zielgewicht vollzogen wird. Zudem können solche Schwingungen auch weitere gravimetrische Messinstrumente und weitere Dosiervorrichtungen, deren Aufstellungsort in unmittelbarer Nähe zur Dosiervorrichtung 200 ist, negativ beeinflussen.

Zur Reduktion solcher Schwingungen, insbesondere von auf den Untergrund 383 einwirkender Kippmomente können verschiedene Massnahmen getroffen werden. In der Figur 3 wird schematisch und in Aufsicht eine zweite Ausführung einer Dosiervorrichtung 300 dargestellt. Bei dieser Dosiervorrichtung 300 ist nicht nur die Aufnahmevorrichtung 330, sondern auch der Aktuator 360 pendelnd mit der Haltevorrichtung 320 verbunden. Dadurch werden zumindest die horizontal wirkenden Kraftkomponenten der Schockwellen kompensiert und die Kippmomente im Befestigungsbereich zwischen der Haltevorrichtung 320 und dem Untergrund 383 entsprechend eliminiert oder zumindest reduziert.

Eine dritte Ausführung der Dosiervorrichtung 400 in schematischer Darstellung und in Aufsicht wird in Figur 4 gezeigt. Die Aufnahmevorrichtung 430 ist an der Haltevorrichtung 420 schwenkbar gelagert. Der Aktuator 460 und die Antriebsvorrichtung 450 sind mit der Haltevorrichtung 420 starr verbunden. Die Haltevorrichtung 420 ihrerseits ist pendelnd an einem Fuss 470 aufgehängt. Durch diese Anordnung schwingt infolge der Reaktionskräfte die Haltevorrichtung 420 mitsamt dem Aktuator 460 und der Antriebsvorrichtung 450 aus, wobei sich die Auslenkwinkel beziehungsweise die Schwenkamplitude der Haltevorrichtung 420 zur Schwenkamplitude der Aufnahmevorrichtung 430 umgekehrt zu deren Massenträgheitsmomenten bezogen auf die zugeordnete Schwenkachse verhalten.

Die in Figur 2 bis Figur 4 gezeigten Ausführungen weisen alle frei pendelnde Massen auf. Sofern die Resonanzfrequenz der pendelnden Massen gleich der Frequenz des Aktuators ist, könnte dies zu einer Aufschauklung der Pendelbewegungen und damit zur Störung des Dosierbetriebes führen. Um dies zu verhindern, können für jede schwenkbar angeordnete Masse Endanschläge und/oder Dämpfungselemente vorgesehen werden. Eine weitere Möglichkeit bestünde darin, die Erzeugung der Schockwellen durch den Aktuator derart zu steuern, dass den Pendelbewegungen entgegengewirkt und dadurch einer Aufschaukelung entgegengewirkt wird. Voraussetzung ist aber, dass alle einzeln pendelnd aufgehängten Massen bezogen auf ihre Schwenkachse gleiche Massenträgheitsmomente aufweisen.

Figur 5 zeigt die dreidimensionale Darstellung einer Dosiervorrichtung 500 im Teilschnitt, wobei die Anordnung der Haltevorrichtung 520, des Aktuators 560 und der Aufnahmevorrichtung 530 zueinander der in Figur 3 dargestellten zweiten Ausführung entspricht.

Die Aufnahmevorrichtung weist einen Stempel 532 auf, welcher durch eine an der Haltevorrichtung 520 ausgebildeten Durchführung 521 hindurchreicht. Diese Durchführung 521 ist entsprechend ausgestaltet, dass der Stempel 532 auch beim Auslenken der Aufnahmevorrichtung 530 die Haltevorrichtung 520 nicht berührt. Die Aufnahmevorrichtung 530 weist zudem ein in beiden Schwenkrichtungen wirkendes Positionierungs- und Anschlagelement 535 auf, welches im Wesentlichen aus einer an der Aufnahmevorrichtung 530 ausgebildeten Bohrung 534, zwei Federelementen 533 und einem mit der Haltevorrichtung 520 verbunden Bundbolzen 522 besteht. Durch das erste Federelement 533, welches zwischen der Haltevorrichtung 520 und der Aufnahmevorrichtung 530 angeordnet ist, wird die Aufnahmevorrichtung 530 von der Haltevorrichtung 520 weggedrückt. Diesem Federelement 533 wirkt das zweite Federelement 533 entgegen, welches zwischen dem Bund des Bundbolzens 522 und der Aufnahmevorrichtung 530 angeordnet ist. Durch die Federkräfte beider Federelemente 533 wird die Aufnahmevorrichtung 530 in Relation zur Haltevorrichtung 520 positioniert.

Der Aktuator 560 weist einen Aktuatormotor 561 auf, welcher ein mit mehreren sägezahnartigen Rampen versehenes Spannrad 562 antreibt. Damit das Spannrad 562 besser einsehbar ist, ist der Aktuatormotor 561 im Teilschnitt dargestellt, wobei auf die Darstellung von Innendetails verzichtet wurde. Der Aktuatormotor 561 ist im Aktuatorgehäuse 564 angeordnet. Durch die sägezahnartigen Rampen des Spannrades 562 wird ein Spannbügel 563, welcher am Aktuatorgehäuse 564 schwenkbar gelagert ist, gegen eine Schlagfeder 566 gedrückt und die Schlagfeder 566 gespannt. Eine mit dem Spannbügel 563 verbundene Hammermasse 565 wird durch die Schlagfeder 566 gegen den Stempel 532 hin beschleunigt, sobald eine der Rampenkanten des Spannrades 562 den Spannbügel 563 freigibt. Sobald die Hammermasse 565 auf den Stempel 532 trifft, wird im Stempel 532 eine Schockwelle erzeugt, welche sich über den Stempel 532 auf die Aufnahmevorrichtung 530 und die darin eingesetzte Dosiereinheit überträgt. Dabei schwenkt die Aufnahmevorrichtung 530 leicht aus und wird durch das Positionierungs- und Anschlagelement 535 wieder in die Ausgangslage zurückgebracht.

Die Schlagmechanik des Aktuators 560 erzeugt Reaktionskräfte, welche den an der Haltevorrichtung 520 pendelnd angeordneten Aktuator 560 ausschwenken lassen. Um den Schwenkbereich des Aktuators 560 in Relation zur Haltevorrichtung 520 zu begrenzen, ist zwischen dem Aktuator 560 und der Haltevorrichtung 520 ein Dämpfungselement 567 angeordnet.

Aufgrund der verschiedenen Pulvercharakteristiken sind zur Auflockerung der Pulver auch unterschiedliche Schlagfrequenzen und Schlag- oder Pulsamplituden erforderlich. Während die Schlagfrequenz problemlos durch die Veränderung der Drehzahl des Spannrades 562 variiert werden kann, erfordert die Einstellung der Schlagamplituden bei der vorliegenden mechanischen Lösung weitere Elemente. Beispielsweise könnte die Vorspannung der Schlagfeder 566 mittels Einstellelementen wie Unterlegscheiben oder einem einstellbaren Federhalter verändert werden. Je grösser die Schlagamplituden der zu erzeugenden mechanischen Pulse beziehungsweise Schockwellen in der Aufnahmevorrichtung 530 sein sollen, desto grösser muss das Massenträgheitsmoment des pendelnd aufgehängten Aktuators 560 in Relation zum Massenträgheitsmoment der Aufnahmevorrichtung 530 sein. Das Massenträgheitsmoment des Aktuators 560 kann durch zusätzliches Anbringen einer Pendel masse 568 und/oder durch die Veränderung des Abstandes dieser Pendel masse 568 zur Schwenkachse des Aktuators 560 verändert werden.

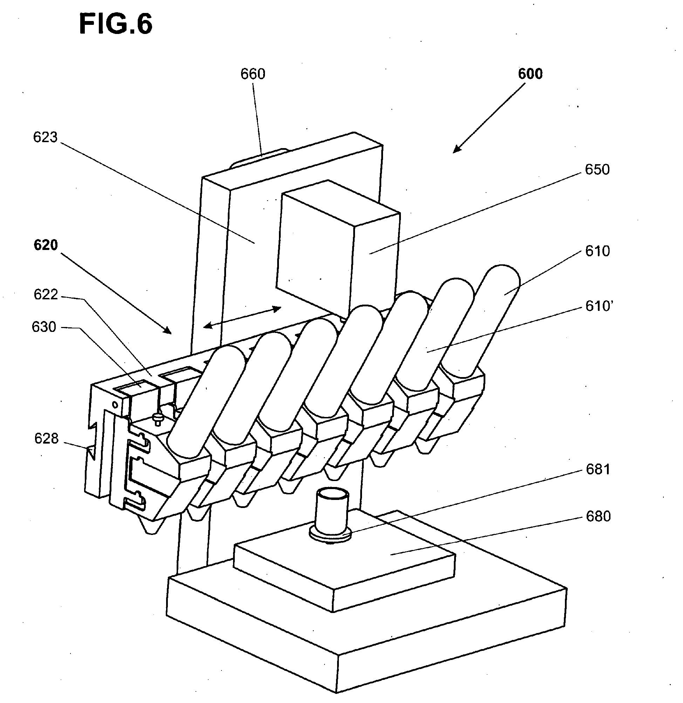

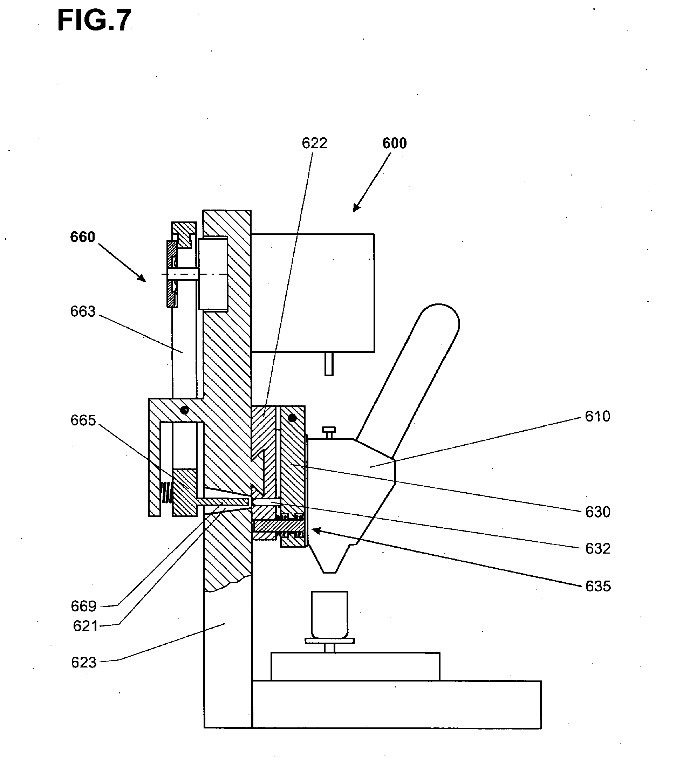

Figur 6 zeigt die dreidimensionale Darstellung einer Dosiervorrichtung 600 mit mehreren nebeneinander an einer Haltevorrichtung 620 angeordneten Aufnahmevorrichtungen 630. In jeder Aufnahmevorrichtung 630 ist eine Dosiereinheit 610eingesetzt. Die Anordnung der Haltevorrichtung 620, des Aktuators 660 und der Aufnahmevorrichtung 630 entspricht im Wesentlichen der in Figur 2 dargestellten ersten Ausführung. Die Haltevorrichtung 620 weist zwei Hauptteile auf, wobei am ersten Hauptteil 622 die Aufnahmevorrichtungen 630 nebeneinander angeordnet sind und dieser erste Hauptteil 622 durch eine Linearführung 628 mit dem zweiten Hauptteil 623 verbunden ist. Die Führungsrichtung der Linearführung 628 ist im Wesentlichen horizontal ausgerichtet. Am zweiten Hauptteil 623 sind der Aktuator 660 und die Antriebsvorrichtung 650, sowie der Lastaufnehmer 681 einer Waage 680 zueinander ausgerichtet angeordnet. Der Benutzer der Dosiervorrichtung 600 kann aus den nebeneinander angeordneten Dosiereinheiten 610, 610' auswählen, dann durch manuelle oder automatische lineare Verschiebung des ersten Hauptteils 622 in Führungsrichtung die entsprechende Dosiereinheit 610, 610' in Dosierstellung bringen und die Dosiereinheit 610, 610' mit der Antriebsvorrichtung koppeln. Damit nicht jede Aufnahmevorrichtung 630 einen eigenen Aktuator 660 benötigt, muss der nicht dargestellte Stempel zweiteilig ausgeführt sein. Diese zweiteilige Lösung wird nachfolgend in Figur 7 ausführlich beschrieben.

In Figur 7 ist schematisch die Dosiervorrichtung 600 aus Figur 6 in Aufsicht und im Schnitt dargestellt. Die Beschreibung der einzelnen Elemente in Figur 6 gilt somit auch für die in Figur 7 dargestellten Elemente. Aus dieser Schnittdarstellung ist die Funktionsweise des Aktuators 660 eindeutig einsehbar, insbesondere wie der Spannbügel 663 schwenkbar am zweiten Hauptteil 623 festgelegt ist und die mit dem Spannbügel 663 verbundene Hammermasse 665 auf die Aufnahmevorrichtung 630 einwirkt. Am zweiten Hauptteil 623 ist ebenfalls eine Durchführung 621 ausgebildet, durch welche ein mit der Hammermasse 665 verbundener Stempel 669 durchreicht. Mit jeder Aufnahmevorrichtung 630 ist je ein in seiner Längsrichtung im ersten Hauptteil 622 linear verschiebbar gelagerter Schlagbolzen 632 wirkverbunden. Dank dieser Auslegung kann derselbe Aktuator 650 auf die sich jeweils in Betriebsposition befindliche Aufnahmevorrichtung 630 beziehungsweise die Dosiereinheit 610 einwirken.

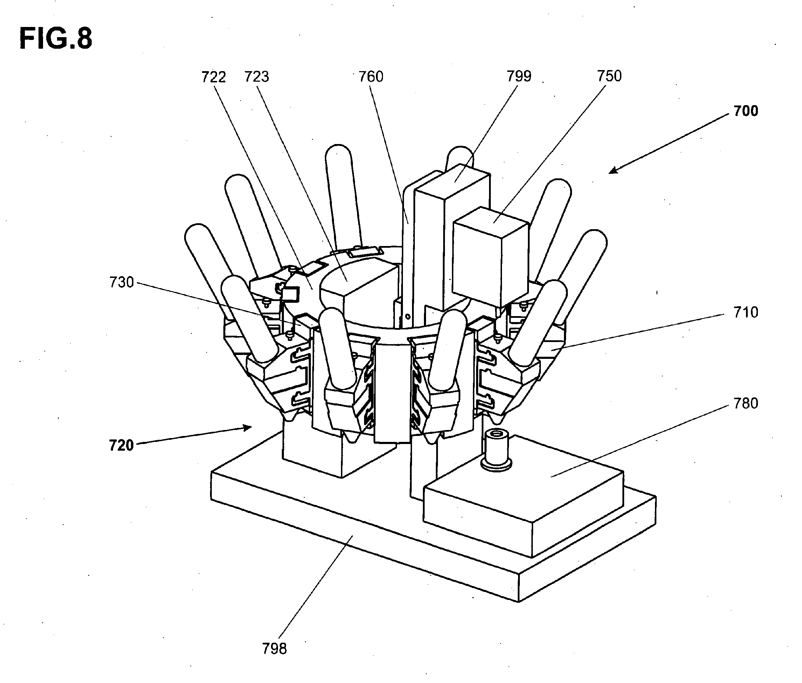

Figur 8 zeigt die dreidimensionale Darstellung einer Dosiervorrichtung 700. Deren Auslegung und Anordnung der einzelnen Komponenten entspricht weitgehend der in Figuren 6 und Figur 7 dargestellten Dosiervorrichtung 600. Anders als in Figur 6, weist die Haltevorrichtung 720 ein ringförmig ausgebildetes erstes Hauptteil 722 auf, welches an einem zweiten Hauptteil 723 drehbar gelagert ist. Die Antriebsvorrichtung 750 und der Aktuator 760 sind nicht am zweiten Hauptteil 723, sondern an einem Ständer 799 angeordnet. Am ersten Hauptteil 722 sind mehrere Aufnahmevorrichtungen 730 an der von der Drehachse des ersten Hauptteils abgewandten Seite angeordnet, wobei in jeder Aufnahmevorrichtung 730 eine Dosiereinheit 710 eingesetzt ist. Die Haltevorrichtung 720 und der Ständer 799 sowie die Waage 780 sind über eine Grundplatte 798 miteinander verbunden. Selbstverständlich können die Antriebsvorrichtung 750 und der Aktuator 760 auch am zweiten Hauptteil 723 angeordnet sein, womit der Ständer 799 entfallen würde. Es ist auch nicht notwendig, dass in jeder Aufnahmevorrichtung 730 eine Dosiereinheit 710 eingesetzt ist.

Der Begriff ringförmig ist in Zusammenhang mit der vorliegenden Erfindung nicht auf kreisrunde Ausgestaltungen des ersten Hauptteils 722 beschränkt. Als ringförmige Ausgestaltung werden auch drei- und mehreckige Ausbildungen verstanden. Ferner muss die Ringform nicht geschlossen sein, das erste Hauptteil kann auch bogenförmig ausgebildet sein. Auch kettenförmig ausgestaltete erste Hauptteile, wie sie beispielsweise bei Werkzeugwechslern von grossen Bearbeitungsmaschinen verwendet werden, sind unter dem Begriff "ringförmig" zu verstehen. Je nach Ausgestaltung der Linearführung oder einer entsprechenden Verbindungsstelle kann selbstverständlich der ganze erste Hauptteil mit den eingesetzten Dosiereinheiten ausgewechselt werden. Dadurch entfällt die Auswechslung einzelner Dosiereinheiten, so dass vorbereitete, ganze Dosiersätze in die Dosiervorrichtung eingesetzt werden können.

Obwohl die Erfindung durch die Darstellung spezifischer Ausführungsbeispiele beschrieben worden ist, ist es offensichtlich, dass zahlreiche weitere Ausführungsvarianten in Kenntnis der vorliegenden Erfindung geschaffen werden können, beispielsweise indem die Merkmale der einzelnen Ausführungsbeispiele miteinander kombiniert und/oder einzelne Funktionseinheiten der Ausführungsbeispiele ausgetauscht werden. So kann der mechanische Aktuator durch andere Aktuator- Typen wie beispielsweise einen Hydraulik- oder Pneumatikzylinder, einen elektromagnetischen oder piezoelektrischen Aktuator ersetzt werden.

Dementsprechend werden solche Kombinationen und Alternativen als Teil der Erfindung betrachtet.

**Bezugszeichenliste**

| | |
|---|---|
| 700, 600, 500, 400, 300, 200, 100 | Dosiervorrichtung |
| 710, 610', 610, 110 | Dosiereinheit |
| 111 | Entnahmegefäss |
| 112 | Dosierkopf |
| 113 | Austragungsöffnung |
| 114 | Verschlusswelle |
| 115 | Kupplung |
| 119 | Halterungen |
| 720, 620, 520, 420, 320, 220, 120 | Haltevorrichtung |
| 730, 630, 530, 430, 330, 230, 130 | Aufnahmevorrichtung |
| 131 | Schwenkachse |
| 132 | Halteelement |
| 750, 650,450,250,150 | Antriebsvorrichtung |
| 151 | Antriebswelle |
| 760, 660, 560, 460, 360, 260, 160 | Aktuator |
| 261, 161 | Stempel |
| 470, 170 | Fuss |
| 780, 680, 180 | Waage |
| 681, 181 | Lastaufnehmer |
| 190 | Zielgefäss |
| 383, 283 | Untergrund |
| 621, 521 | Durchführung |
| 522 | Bundbolzen |
| 532 | Stempel |
| 533 | Federelement |
| 534 | Bohrung |
| 535 | Positionierungs- und Anschlagelement |
| 561 | Aktuatormotor |
| 562 | Spannrad |
| 663, 563 | Spannbügel |
| 564 | Aktuatorgehäuse |
| 665,565 | Hammermasse |
| 566 | Schlagfeder |
| 567 | Dämpfungselement |
| 568 | Pendelmasse |
| 622 | erstes Hauptteil |
| 623 | zweites Hauptteil |
| 628 | Linearführung |
| 632 | Schlagbolzen |
| 669 | Stempel |
| 798 | Grundplatte |
| 799 | Ständer |

## Patentansprüche

1. Dosiervorrichtung ((100, 200, 300, 400, 500, 600, 700) für pulver- oder pastenförmiges Dosiergut mit einer Haltevorrichtung (120) die mindestens eine Aufnahmevorrichtung (130) aufweist, in welche Aufnahmevorrichtung (130) mindestens eine Dosiereinheit (110) einsetzbar beziehungsweise aus dieser Aufnahmevorrichtung (130) entfernbar ist und mit mindestens einem auf die Aufnahmevorrichtung (130) einwirkenden Aktuator (160), **dadurch gekennzeichnet, dass** die Aufnahmevorrichtung (130) an der Haltevorrichtung (120) schwenkbar gelagert ist und durch den Aktuator (160) oszillierende Schwenkbewegungen der Aufnahmevorrichtung (130) erzeugbar sind.

2. Dosiervorrichtung (100, 200, 300, 400, 500, 600, 700) nach Anspruch 1,
**dadurch gekennzeichnet, dass** in Betriebsstellung der Dosiervorrichtung (100) die Schwenkachse (131) der Aufnahmevorrichtung (130) im Wesentlichen horizontal angeordnet ist.

3. Dosiervorrichtung (100, 200, 300, 400, 500, 600, 700) nach Anspruch 2,
**dadurch gekennzeichnet, dass** die Dosiervorrichtung (100) eine Antriebsvorrichtung (150) mit einer Antriebswelle (151) aufweist, welche Antriebswelle (151) mit einer Verschlusswelle (114) und/oder einer Rührwerkswelle der Dosiereinheit (110) mittels einer Kupplung (115) verbindbar ist, die Kupplung (115) in einer die Schwenkachse (131) enthaltenden, horizontalen Ebene angeordnet ist und die Kupplung (115) zur Aufnahme axialer Verschiebungen und Drehachsenwinkeländerungen der Verschlusswelle (114) relativ zur Antriebswelle (151) infolge der Schwenkbewegungen einen Längen- und Winkelausgleich aufweist.

4. Dosiervorrichtung (100, 200, 300, 400, 500, 600, 700) nach einem der Ansprüche 1 bis 3, **dadurch gekennzeichnet, dass** zur Abstützung der Reaktionskräfte der mechanischen Pulse des Aktuators (160) an der Haltevorrichtung (120) der Aktuator (160) wirkungsbezogen zwischen der Haltevorrichtung (120) und der Aufnahmevorrichtung (130) angeordnet ist.

5. Dosiervorrichtung (100, 200, 300, 400, 500, 600, 700) nach einem der Ansprüche 1 bis 3, **dadurch gekennzeichnet, dass** der Aktuator (160) mit der Aufnahmevorrichtung (130) wirkverbunden ist und der Aktuator (160) ein Pendel zur Aufnahme der Reaktionskräfte der mechanischen Impulse des Aktuators (160) aufweist.

6. Dosiervorrichtung (100, 200, 300, 400, 500, 600, 700) nach Anspruch 5, **dadurch gekennzeichnet, dass** das Pendel eine Pendelstange und eine Pendelmasse (568) aufweist, wobei die Pendelmasse (568) durch hinzufügen oder entfernen von Gewichtsstücken veränderbar ist.

7. Dosiervorrichtung (100, 200, 300, 400, 500, 600, 700) nach Anspruch 6, **dadurch gekennzeichnet, dass** die Pendelmasse (568) entlang der Pendelstange verschiebbar und an einer beliebigen Position der Pendelstange feststellbar ist.

8. Dosiervorrichtung (100, 200, 300, 400, 500, 600, 700) nach einem der Ansprüche 5 bis 7, **dadurch gekennzeichnet, dass** das Massenträgheitsmoment des Pendels bezogen auf die Schwenkachse des Pendels zumindest dem Massenträgheitsmoment der Aufnahmevorrichtung (130) mit eingesetzter Dosiereinheit (110) bezogen auf die Schwenkachse (131) entspricht.

9. Dosiervorrichtung (100, 200, 300, 400, 500, 600, 700) nach einem der Ansprüche 5 bis 8, **dadurch gekennzeichnet, dass** im Wesentlichen die gesamte Haltevorrichtung (120, 420) als Pendelmasse (568) dienend pendelnd aufgehängt ist.

10. Dosiervorrichtung (100, 200, 300, 400, 500, 600, 700) nach einem der Ansprüche 1 bis 9, **dadurch gekennzeichnet, dass** mindestens ein der Einstellung der Pulsamplitude des Aktuators (160) dienende einstellbare Schlagfeder (566) und/oder ein Dämpfungselement (567) und/oder ein Federelement (533) vorhanden ist.

11. Dosiervorrichtung (100, 200, 300, 400, 500, 600, 700) nach einem der Ansprüche 1 bis 10, **dadurch gekennzeichnet, dass** die Aufnahmevorrichtung (130) einen mittels Einstellelementen begrenzbaren Schwenkbereich und/oder ein Positionierungs- und Anschlagelement (535) aufweist.

12. Dosiervorrichtung (100, 200, 300, 400, 500, 600, 700) nach einem der Ansprüche 1 bis 11, **dadurch gekennzeichnet, dass** der Aktuator (150) eine mittels einer Schlagfeder (566) beaufschlagbare Hammermasse (565) aufweist, wobei die Schlagfeder (566) durch einen Spannmechanismus spannbar und schlagartig freigebbar ist, die Hammermasse (565) durch die Schlagfeder (566) beschleunigbar ist und durch den Aufprall der Hammermasse (565) an der Aufnahmevorrichtung (130) oder an mit der Aufnahmevorrichtung (130) verbundenen Teilen eine Schockwelle in der Aufnahmevorrichtung (130) erzeugbar ist.

13. Dosiervorrichtung (100, 200, 300, 400, 500, 600, 700) nach einem der Ansprüche 1 bis 11, **dadurch gekennzeichnet, dass** ein erstes Hauptteil (622) der Haltevorrichtung (620) eine horizontale Linearführung (628) aufweist und durch die Linearführung (628) mit einem zweiten Hauptteil (623) der Haltevorrichtung (620) verbunden ist, wobei mehrere Aufnahmevorrichtungen (630) an am ersten Hauptteil (622) der Haltevorrichtung (620) nebeneinander und einzeln schwenkbar gelagert, angeordnet sind.

14. Dosiervorrichtung (100, 200, 300, 400, 500, 600, 700) nach einem der Ansprüche 1 bis 11, **dadurch gekennzeichnet, dass** ein erstes Hauptteil (722) der Haltevorrichtung (720) ringförmig ausgebildet ist und an einem zweiten Hauptteil (723) der Haltevorrichtung (720) um eine vertikale Achse drehbar gelagert ist, wobei mehrere Aufnahmevorrichtungen (730) an der Aussenseite des ringförmigen ersten Hauptteils (722) nebeneinander und einzeln schwenkbar gelagert, angeordnet sind.

15. Dosiervorrichtung (100, 200, 300, 400, 500, 600, 700) nach einem der Ansprüche 13 oder 14, **dadurch gekennzeichnet, dass** im Bereich der Antriebsvorrichtung (650) ein Aktuator (660) angeordnet ist, durch dessen Pulse oszillierende Schwenkbewegungen nur bei der jeweils im Bereich der Antriebsvorrichtung (650) befindlichen Aufnahmevorrichtung (630) erzeugbar sind.

16. Verfahren zum dosieren von pulverförmigem Dosiergut mit einer Dosiervorrichtung (100, 200, 300, 400, 500, 600, 700) nach einem der Ansprüche 1 bis 15, **dadurch gekennzeichnet dass** in einem ersten Schritt eine Dosiereinheit (110) in die Aufnahmevorrichtung (130) einer Dosiervorrichtung (100) eingesetzt und die Dosiereinheit (110) mit der Antriebsvorrichtung (150) gekuppelt wird, in einem zweiten Schritt mit dem Aktuator (160) das Dosiergut aufgelockert wird, in einem dritten Schritt die gewünschte Zielmenge Dosiergut durch Einwirkung der Antriebsvorrichtung (150) auf die Dosiereinheit (110) in ein Zielgefäss (190) ausgetragen wird und gegebenenfalls weitere Zielmengen in weitere Zielgefässe (190) ausgetragen werden und in einem fünften Schritt die Dosiereinheit (110) aus der Dosiervorrichtung (100) entfernt wird.

17. Verfahren nach Anspruch 16, **dadurch gekennzeichnet, dass** zwischen jedem Austragen einer Zielmenge Dosiergut aus der Dosiereinheit (110) in ein Zielgefäss (190) und/oder nach dem Erreichen einer bestimmten Austragungsmenge an Dosiergut, durch den Aktuator (160) das Dosiergut in der Dosiereinheit (110) aufgelockert wird.

18. Verfahren nach Anspruch 16 oder 17, **dadurch gekennzeichnet, dass** zur Auflockerung des Dosiergutes in der Dosiereinheit (110) mehrere, durch den Aktuator (160) erzeugte mechanische Pulse auf die Aufnahmevorrichtung (130) einwirken, wobei die Frequenz und die Amplitude der mechanischen Pulse auf das Dosiergut abgestimmt sind.

19. Verfahren nach einem der Ansprüche 16 bis 18, **dadurch gekennzeichnet, dass** die Schlagfrequenz des Aktuators (160) in Dissonanz zur Schwingfrequenz der Aufnahmevorrichtung (130) ist.

## Claims

1. Dosage-dispensing device (100, 200, 300, 400, 500, 600, 700) for dosage material in powder- or paste form comprising a holder device (120) which comprises at least one receiving device (130), wherein at least one dosage-dispensing unit (110) can be set into, as well as removed from, said receiving device (130), wherein the dosage-dispensing device further comprises at least one actuator (160) whose action is directed at the receiving device (130), **characterized in that** the receiving device (130) is pivotably supported on the holder device (120) with the freedom of performing a pendulous movement, and that the actuator (160) is operable to generate oscillatory pendulous movements of the receiving device (130).

2. Dosage-dispensing device (100, 200, 300, 400, 500, 600, 700) according to claim 1, **characterized in that** the pivot axis (131) of the receiving device (130) is arranged substantially with a horizontal orientation when the dosage-dispensing device (100) is in its operating position.

3. Dosage-dispensing device (100, 200, 300, 400, 500, 600, 700) according to claim 2, **characterized in that** the dosage-dispensing device (100) comprises a drive device (150) with a drive shaft (151) which can be connected to a closure shaft (114) and/or to a stirring mechanism shaft of the dosage-dispensing unit (110) by means of a coupler device (115), and further **characterized in that** the coupler device (115) is arranged in a horizontal plane that contains the pivot axis (131), and that the coupler device (115) has a length- and angle-adaptation capability in order to absorb axial displacements and changes of the angle between the respective rotary axes of the closure shaft (114) and the drive shaft (151) which occur as a result of said pendulous movements.

4. Dosage-dispensing device (100, 200, 300, 400, 500, 600, 700) according to one of the claims 1 to 3, **characterized in that** to take up the reactive forces sustained by the holder device (120) as a result of the mechanical impact pulses generated by the actuator (160), the actuator (160) is functionally interposed between the holder device (120) and the receiving device (130).

5. Dosage-dispensing device (100, 200, 300, 400, 500, 600, 700) according to one of the claims 1 to 3, **characterized in that** the actuator (160) is functionally connected to the receiving device (130), and that the actuator includes a pendulum that serves to absorb the reactive forces of the mechanical impact pulses of the actuator (160).

6. Dosage-dispensing device (100, 200, 300, 400, 500, 600, 700) according to claim 5, **characterized in that** the pendulum comprises a pendulum rod and a pendulum mass (568), wherein the pendulum mass (568) can be changed by adding or removing weight pieces.

7. Dosage-dispensing device (100, 200, 300, 400, 500, 600, 700) according to claim 6, **characterized in that** the pendulum mass (568) can be moved along the pendulum rod and locked in a desired position on the pendulum rod.

8. Dosage-dispensing device (100, 200, 300, 400, 500, 600, 700) according to one of the claims 5 to 7, **characterized in that** the mass moment of inertia of the pendulum relative to the pivot axis of the pendulum is at least equal to the mass moment of inertia of the receiving device (130) with installed dosage-dispensing unit (110) relative to the pivot axis (131).

9. Dosage-dispensing device (100, 200, 300, 400, 500, 600, 700) according to one of the claims 5 to 8, **characterized in that** substantially the entire holder device (120, 420) is pivotably suspended to serve as pendulum mass (568).

10. Dosage-dispensing device (100, 200, 300, 400, 500, 600, 700) according to one of the claims 1 to 9, **characterized by** the presence of at least one adjustable propulsion spring (566) serving for the adjustment of the impact pulse amplitude of the actuator (160) and/or **characterized by** the presence of a damper element (567) and/or of a spring element (533).

11. Dosage-dispensing device (100, 200, 300, 400, 500, 600, 700) according to one of the claims 1 to 10, **characterized in that** the receiving device (130) comprises a pivoting range which can be delimited by adjustable elements, and/or that the receiving device (130) comprises a positioning- and end stop element (535).

12. Dosage-dispensing device (100, 200, 300, 400, 500, 600, 700) according to one of the claims 1 to 11, **characterized in that** the actuator (150) comprises a hammer mass (565) which can be driven by a propulsion spring (566), wherein the propulsion spring (566) can be tensioned by a tensioning mechanism and instantaneously released, the hammer mass (565) can be accelerated by the propulsion spring (566), and a shock wave can be produced in the receiving device (130) through the impact of the hammer mass (565) on the receiving device (130) or on component parts that are connected to the receiving device (130).

13. Dosage-dispensing device (100, 200, 300, 400, 500, 600, 700) according to one of the claims 1 to 11, **characterized in that** a first main part (622) of the holder device (620) comprises a horizontal linear guide (628) and is connected by way of said linear guide (628) to a second main part (623) of the holder device (620), wherein on the first main part (622) of the holder device (620) a plurality of receiving devices (620) are arranged side-by-side with the freedom of individual pivoting movement.

14. Dosage-dispensing device (100, 200, 300, 400, 500, 600, 700) according to one of the claims 1 to 11, **characterized in that** a first main part (722) of the holder device (720) is designed with a ring-shaped configuration and supported on the second main part (723) of the holder device (720) with the mobility to rotate about a vertical axis, wherein on the outside of the ring-shaped first main part (722) a plurality of receiving devices (730) are arranged side-by-side with the freedom of individual pivoting movement.

15. Dosage-dispensing device (100, 200, 300, 400, 500, 600, 700) according to one of the claims 13 or 14, **characterized in that** in the area of the drive device (650) an actuator (660) is arranged in such a way that it is possible with the impact pulses of said actuator (660) to generate oscillatory pivoting movements only in the receiving device (630) that is currently stationed in the area of the drive device (650).

16. Method of dispensing doses of a pulverous dosage material with a dosage- dispensing device (100, 200, 300, 400, 500, 600, 700) according to one of the claims 1 to 15, **characterized in that** in a first step, a dosage-dispensing unit (110) is set into the receiving device (130) of a dosage-dispensing device (100), and the dosage-dispensing unit (110) is coupled to the drive device (150); in a second step, the dosage material is loosened with the actuator (160); in a third step, the desired target quantity of dosage material is delivered into a target container (190) through the action exerted on the dosage-dispensing unit (110) by the drive device (150); in a fourth step, if applicable, further target quantities are delivered into further target containers (190); and in a fifth step, the dosage-dispensing unit (110) is removed from the dosage-dispensing device (100).

17. Method according to claim 16, **characterized in that** the loosening of the dosage material in the dosage-dispensing unit (110) by the actuator (160) takes place between individual deliveries of target quantities of dosage material from the dosage-dispensing unit (110) into a target container (190) and/or after the quantity of dosage material delivered has reached a specified amount.

18. Method according to claim 16 or 17, **characterized in that** the loosening of the dosage material in the dosage-dispensing unit (110) is effected by a plurality of mechanical impact pulses directed by the actuator (160) against the receiving device (130), wherein the frequency and amplitude of the mechanical impact pulses are matched to the dosage material.

19. Method according to one of the claims 16 to 18, **characterized in that** the impact pulses of the actuator (160) are of a dissonant frequency in relation to the pendulum-swing frequency of the receiving device (130).

## Revendications

1. Dispositif de dosage (100, 200, 300, 400, 500, 600, 700) pour un produit à doser pulvérulent ou pâteux doté d'un dispositif de retenue (120) qui présente au moins un dispositif de réception (130), dispositif de réception (130) dans lequel au moins une unité de dosage (110) peut être insérée ou dispositif de réception (130) duquel il peut être retiré et doté d'au moins un actionneur (160) agissant sur le dispositif de réception (130), **caractérisé en ce que** le dispositif de réception (130) est monté de façon basculante sur le dispositif de retenue (120) et des mouvements de basculement oscillants du dispositif de réception (130) peuvent être générés par l' actionneur (160).

2. Dispositif de dosage (100, 200, 300, 400, 500, 600, 700) selon la revendication 1, **caractérisé en ce que** l'axe de pivotement (131) du dispositif de réception (130) est disposé sensiblement horizontalement lorsque le dispositif de dosage (100) est en position de service.

3. Dispositif de dosage (100, 200, 300, 400, 500, 600, 700) selon la revendication 2, **caractérisé en ce que** le dispositif de dosage (100) présente un dispositif d'entraînement (150) avec un arbre d'entraînement (151), lequel arbre d'entraînement (151) peut être relié à un arbre de fermeture (114) et/ou un arbre d'agitateur de l'unité de dosage (110) au moyen d'un accouplement (115), l'accouplement (115) étant disposé dans un plan horizontal, contenant l'axe de pivotement (131), et l'accouplement (115) présentant un dispositif d'équilibrage en longueur et en angle pour l'absorption de déplacements axiaux et de variations de l'angle de l'axe de rotation de l'arbre de fermeture (114) par rapport à l'arbre d'entraînement (151) dus aux mouvements de basculement.

4. Dispositif de dosage (100, 200, 300, 400, 500, 600, 700) selon l'une quelconque des revendications 1 à 3, **caractérisé en ce que**, pour soutenir les forces de réaction des impulsions mécaniques de l'actionneur (160) sur le dispositif de retenue (120), l'actionneur (160) est disposé par rapport à l'effet entre le dispositif de retenue (120) et le dispositif de réception (130).

5. Dispositif de dosage (100, 200, 300, 400, 500, 600, 700) selon l'une quelconque des revendications 1 à 3, **caractérisé en ce que** l'actionneur (160) est en liaison active avec le dispositif de réception (130) et l'actionneur (160) présente un pendule pour l'absorption des forces de réaction des impulsions mécaniques de l' actionneur (160).

6. Dispositif de dosage (100, 200, 300, 400, 500, 600, 700) selon la revendication 5, **caractérisé en ce que** le pendule présente une tige de pendule et une masse de pendule (568), la masse de pendule (568) pouvant être modifiée par l'ajout ou l'enlèvement de poids.

7. Dispositif de dosage (100, 200, 300, 400, 500, 600, 700) selon la revendication 6, **caractérisé en ce que** la masse de pendule (568) peut être déplacée le long de la tige de pendule et peut être fixée sur une position quelconque de la tige de pendule.

8. Dispositif de dosage (100, 200, 300, 400, 500, 600, 700) selon l'une quelconque des revendications 5 à 7, **caractérisé en ce que** le moment d'inertie de masse du pendule par rapport à l'axe de pivotement du pendule correspond au moins au moment d'inertie de masse du dispositif de réception (130) avec l'unité de dosage (110) insérée par rapport à l'axe de pivotement (131).

9. Dispositif de dosage (100, 200, 300, 400, 500, 600, 700) selon l'une quelconque des revendications 5 à 8, **caractérisé en ce que** sensiblement l'ensemble du dispositif de retenue (120, 420), servant de masse de pendule (568), est suspendu à la façon d'un pendule.

10. Dispositif de dosage (100, 200, 300, 400, 500, 600, 700) selon l'une quelconque des revendications 1 à 9, **caractérisé en ce qu'**au moins un ressort percuteur (566) réglable, servant au réglage de l'amplitude d'impulsion de l'actionneur (160), et/ou un élément d'amortissement (567) et/ou un élément de ressort (533) sont présents.

11. Dispositif de dosage (100, 200, 300, 400, 500, 600, 700) selon l'une quelconque des revendications 1 à 10, **caractérisé en ce que** le dispositif de réception (130) présente une zone de pivotement pouvant être limitée au moyen d'éléments de réglage et/ou un élément de positionnement et de butée (535).

12. Dispositif de dosage (100, 200, 300, 400, 500, 600, 700) selon l'une quelconque des revendications 1 à 11, **caractérisé en ce que** l'actionneur (150) présente une masse de marteau (565) pouvant être sollicitée au moyen d'un ressort percuteur (566), le ressort percuteur (566) pouvant être tendu par un mécanisme de tension et pouvant être libéré brusquement, la masse de marteau (565) peut être accélérée par le ressort percuteur (566) et une onde de choc peut être générée dans le dispositif de réception (130) du fait de l'impact de la masse de marteau (565) sur le dispositif de réception (130) ou sur des parties reliées au dispositif de réception (130).

13. Dispositif de dosage (100, 200, 300, 400, 500, 600, 700) selon l'une quelconque des revendications 1 à 11, **caractérisé en ce qu'**une première partie principale (622) du dispositif de retenue (620) présente un guide linéaire (628) horizontal et est reliée par le guide linéaire (628) à une seconde partie principale (623) du dispositif de retenue (620), plusieurs dispositifs de réception (630) étant disposés de façon juxtaposée et montés de façon basculante individuellement sur la première partie principale (622) du dispositif de retenue (620).

14. Dispositif de dosage (100, 200, 300, 400, 500, 600, 700) selon l'une quelconque des revendications 1 à 11, **caractérisé en ce qu'**une première partie principale (722) du dispositif de retenue (720) est conçue avec une forme annulaire et est montée sur une seconde partie principale (723) du dispositif de retenue (720) de façon à pouvoir tourner autour d'un axe vertical, plusieurs dispositifs de réception (730) étant disposés de façon juxtaposée et montés de façon basculante individuellement sur le côté extérieur de la première partie (722) de forme annulaire.

15. Dispositif de dosage (100, 200, 300, 400, 500, 600, 700) selon l'une quelconque des revendications 13 ou 14, **caractérisé en ce qu'**un actionneur (660) est disposé dans la zone du dispositif d'entraînement (650), actionneur par les impulsions duquel des mouvements de basculement oscillants peuvent être générés uniquement lorsque le dispositif de réception (630) se trouve respectivement dans la zone du dispositif d'entraînement (650).

16. Procédé pour le dosage de produit à doser pulvérulent comprenant un dispositif de dosage (100, 200, 300, 400, 500, 600, 700) selon l'une quelconque des revendications 1 à 15, **caractérisé en ce que**, dans une première étape, une unité de dosage (110) est insérée dans le dispositif de réception (130) d'un dispositif de dosage (100) et l'unité de dosage (110) est couplée avec le dispositif d'entraînement (150), le produit à doser est ameubli dans une seconde étape avec l'actionneur (160), la quantité cible dosée de produit à doser est évacuée dans une troisième étape sous l'effet du dispositif d'entraînement (150) sur l'unité de dosage (110) dans un récipient cible (190) et éventuellement d'autres quantités cibles sont évacuées dans d'autres récipients cibles (190) et l'unité de dosage (110) est enlevée du dispositif de dosage (100) dans une cinquième étape.

17. Procédé selon la revendication 16, **caractérisé en ce que**, entre chaque évacuation d'une quantité cible de produit à doser de l'unité de dosage (110) dans un récipient cible (190) et/ou après l'obtention d'une quantité d'évacuation définie de produit à doser, le produit à doser est ameubli dans l'unité de dosage (110) par l'actionneur (160).

18. Procédé selon la revendication 16 ou 17, **caractérisé en ce que**, pour le ramollissement du produit à doser dans l'unité de dosage (110), plusieurs impulsions mécaniques, générées par l'actionneur (160), agissent sur le dispositif de réception (130), la fréquence et l'amplitude des impulsions mécaniques étant adaptées au produit à doser.

19. Procédé selon l'une quelconque des revendications 16 à 18, **caractérisé en ce que** la fréquence de percussion de l'actionneur (160) est en dissonance par rapport à la fréquence d'oscillation du dispositif de réception (130).
